# EUROPEAN PATENT APPLICATION

(11) **EP 1 829 678 A1**
(43) Date of publication of application: **05.09.2007**
(21) Application number: 06004239.7
(22) Date of filing: 02.03.2006
(51) Int. Cl.: B32B 27/20, B32B 27/30, C08K 5/00

(54) **Resin plate**

(71) Applicant: SUMITOMO CHEMICAL CO., LTD., Tokyo 104-8260 (JP)
(72) Inventor: Maekawa, Tomohiro, Niihama-shi Ehime (JP); Hamamatsu, Toyohiro, Niihama-shi Ehime (JP)
(74) Representative: Vossius & Partner

(57) **Abstract**

A resin plate comprising a first and at least one second layers is provided. The first layer comprises a resin having 75 % by weight or larger of styrene-based unit on the basis of resin (A), and the second layer comprises an ultraviolet absorber and a resin having 50 % by weight or larger of styrene-based unit on the basis of resin (B), in which the ultraviolet absorber is contained in the second layer in the amount of 0,1 to 3 parts by weight per 100 parts by weight of the resin in the second layer and is spread at 0.2 to 2 g per square meter of the second layer. The resin plate has little deformation due to moisture absorption and high durability, even if the amount of ultraviolet absorber contained is relatively small.

## Description

The present invention relates to a resin plate. In particular, the present invention relates to a resin plate suppressing its deformation due to moisture absorption and having excellent durability.

A resin plate mainly having a styrene-based unit as a monomeric unit have been employed in various applications, since the resin plate has high transparency and low water absorption.

However, due to insufficient durability, the resin plate may be degraded during its use depending on the condition.

In order to improve the durability, it is known to use an ultraviolet absorber (see, Reference JETI, Vol. 46, No. 5, pp116-121 (1998)). However, sufficient durability is not always provided even if the large amount of ultraviolet absorber is used. In addition, the large amount of ultraviolet absorber makes the production cost high, and may cause lowering other physical properties of the resin plate. Also, deformation of the plate may occur.

An object of the present invention is to provide a resin plate having little deformation due to moisture absorption in addition to high durability. This object could be achieved on the basis of the finding that a resin plate having at least two styrene-based layers, in which one layer comprises an ultraviolet absorber and a resin having styrene-based units and optional methyl methacrylate-based units, has little deformation due to moisture absorption and high durability, even if the amount of ultraviolet absorber contained is relatively small.

The present invention provides a resin plate comprising a first layer and at least one second layer placed on at least one side of the first layer,
wherein the first layer comprises a resin (resin (A)) having 75 % by weight or more of styrene-based units on the basis of resin (A), and
the second layer comprises an ultraviolet absorber and a resin (resin (B)) having 50 % by weight or more of styrene-base units on the basis of resin (B) in which the ultraviolet absorber is contained in the second layer in the amount of 0.1 to 3 parts by weight per 100 parts by weight of the resin (resin (B)) in the second layer and is spread at 0.2 to 2 g per square meter of the second layer.

Since a resin plate of the present invention has little deformation due to moisture absorption and high durability, the resin plate can be suitably used in the applications such as a light-diffusing plate.

A resin plate in the present invention comprises a first layer and at least one second layer placed on at least one side of the first layer. The second layer further comprises an ultraviolet absorber. Hereinafter, the resin for providing the first layer may be referred to as "resin (A)", while the resin for providing the second layer may be referred to as "resin (B)".

Resin (A) in the first layer has 75 % by weight or more of styrene-based units on the basis of resin (A). Preferably, resin (A) has 75 % by weight or more (i.e., 75-100 % by weight) of styrene-based units and 25 % by weight or less (i.e., 25-0 % by weight) of methyl methacrylate units on the basis of resin (A).

Here, "styrene-based unit" include a monomeric unit made of styrene and a monomeric unit of substituted styrene.

Examples of the substituted styrene include halogenated styrenes such as chlorostyrene and bromostyrene; and alkyl styrenes such as vinyltoluene and α-methyl styrene.

The styrene-based monomers can be used each alone, or in combination of two kinds or more of them, to preparing resin (A).

As mentioned above, resin (A) preferably has 75-100 % by weight of styrene-based units and 25-0 % by weight of methyl methacrylate units. More preferably, resin (A) has 80-100 % by weight of styrene-based units and 20-0 % by weight of methyl methacrylate units. Most preferably, resin (A) has 90-100 % by weight of styrene-based units and 10-0 % by weight of methyl methacrylate units.

Resin (A) may include monomeric units other than styrene-based units and methyl methacrylate units.

Examples of the monomer which can provide a monomeric unit other than a styrene-based unit and a methyl methacrylate unit include other methacrylate-based esters such as ethyl methacrylate, butyl methacrylate, cyclohexyl methacrylate, phenyl methacrylate, benzyl methacrylate, 2-ethylhexyl methacrylate and 2-hydroxyethyl methacrylate; acrylate-based esters such as methyl acrylate, ethyl acrylate, butyl acrylate, cyclohexyl acrylate, phenyl acrylate, benzyl acrylate, 2-ethylhexyl acrylate and 2-hydroxyethyl acrylate; unsaturated acids such as methacrylic acid and acrylic acid; acrylonitrile, methacrylonitrile, maleic anhydride, phenylmaleimide, cyclohexylmaleimide, glutaric anhydride and glutaric imide.

The second layer comprises an ultraviolet absorber and resin (B). Resin (B) in the second layer has by 50 % by weight or more (i.e., 50-100 % by weight) of styrene-based units on the basis of resin (B). Preferably, resin (B) has 50-100 % by weight of styrene-based units and 0-50 % by weight of methyl methacrylate units on the basis of resin (B). More preferably, resin (B) has 50-90 % by weight of styrene-based units and 10-50 % by weight of methyl methacrylateunits on the basis of resin (B).

Resin (B) may also include monomeric units other than styrene-basedunits and methyl methacrylate units. Examples of the monomer which can provide a monomeric unit other than styrene-based unit and methyl methacrylate unit include the substituted styrene and the monomer which can provide a monomeric unit other than styrene-based unit and methyl methacrylate unit, both being mentioned above in resin (A).

As mentioned above, an ultraviolet absorber is contained in the second layer. The ultraviolet absorber is contained in the second layer in the amount of 0.1 to 3 parts by weight per 100 parts by weight of resin (B) and is spread at 0.2 to 2 g per square meter (g/m²) of the second layer.

In terms of durability of the resulting resin plate, the amount of the ultraviolet absorber contained in the second layer is preferably 0.3 part by weight or more per 100 parts by weight of resin (B). In terms of appearance (with no bleed of ultraviolet absorber) and cost of the resulting resin plate, the amount of the ultraviolet absorber contained in the second layer is preferably 2 parts by weight or smaller, and is more preferably 1.5 parts by weight or smaller.

The ultraviolet absorber is contained and is spread in the second layer at 0.2 g/m² to 2 g/m² per unit area of the second layer, as mentioned above, and is preferably contained at 0.3 g/m² to 1.5 g/m² per unit area of the second layer.

The ultraviolet absorber may be contained in the first layer, that is a layer comprising resin (A). In this case, the amount rate of the ultraviolet absorber in the first layer (resin (A) layer) to the resin (A) in the first layer is preferably equal to or smaller than the amount rate of the ultraviolet absorber in the second layer (resin (B) layer) to the resin (B) in the second layer, in view of cost.

The ultraviolet absorber may be an ultraviolet absorber which can absorb light in a wavelength range of typically from about 250 nm to about 320 nm, preferably having a relative maximum absorption peak at a wavelength in this wavelength range. More preferably, the ultraviolet absorber has a maximum absorption peak (λ max) at a wavelength in the range of from about 250 nm to about 320 nm as the most largest absorption peak in the wavelength range of from about 250 nm to about 800 nm. When such an ultraviolet absorber is used, the resulting resin plate has an improved durability and a reduced coloring thereof, which are preferred.

The ultraviolet absorber preferably has a molar absorption coefficient (ε max) at the most largest absorption peak, of about 10,000 mol⁻¹cm⁻¹ or larger (more preferably of about 15,000 mol⁻¹cm⁻¹ or larger) and/or the molecular weight (Mw) of about 400 or smaller. When such an ultraviolet absorber is preferably used, since the amount by weight (based on a mass standard) of the ultraviolet absorber to be used can be reduced.

Examples of the ultraviolet absorber include a benzophenone-based ultraviolet absorer, a cyanoacrylate-based ultraviolet absorber, a salicylate-based ultraviolet absorber, a nickel complex salt-based ultraviolet absorer, a benzoate-based ultraviolet absorber, a benzotriazole-based ultraviolet absorber, a malonate-based ultraviolet absorber, an oxalanilide-based ultraviolet absorber and an acetate-based ultraviolet absorber. These ultraviolet absorbers may be used each alone, or in combination of two kinds or more of them.

Among them, a benzophenone-based ultraviolet absorer, a benzotriazole-based ultraviolet absorber, a malonate-based ultraviolet absorber, an oxalanilide-based ultraviolet absorber and an acetate-based ultraviolet absorber are preferably used; and particularly, a malonate ester-based ultraviolet absorber, an oxalanilide-based ultraviolet absorber and an acetate-based ultraviolet absorber are more preferably used. When such an ultraviolet absorber is used, the resulting resin plate has an improved durability and a reduced coloring thereof, which are preferred.

Examples of the benzophenone-based ultraviolet absorbing agent include 2,4-dihydroxybenzophenone (Mw: 214, λ max: 288 nm, ε max: 14,100 mol⁻¹cm⁻¹), 2-hydroxy-4-methoxybenzophenone (Mw: 228, λ max: 289 nm, e max: 14,700 mol⁻¹cm⁻¹), 2-hydroxy-4-methoxybenzophenone-5-sulfonic acid (Mw: 308, λ max: 292 nm, ε max: 12,500 mol⁻¹cm⁻¹), 2-hydroxy-4-octyloxybenzophenone (Mw: 326, λ max: 291 nm, ε max: 15300 mol⁻¹cm⁻¹), 4-dodecyloxy-2-hydroxybenzophenone (Mw: 383, λ max: 290 nm, ε max: 16,200 mol⁻¹cm⁻¹), 4-benzyloxy-2-hydroxybenzophenone (Mw: 304, λ max: 289 nm, ε max: 15, 900 mol⁻¹cm⁻¹), 2,2'-dihydroxy-4,4'-dimethoxybenzophenone (Mw: 274, λ max: 289 nm, ε max: 11,800 mol⁻¹cm⁻¹), 1,6-bis(4-benzoyl-3-hydroxyphenoxy)-hexane (Mw: 511, λ max: 290 nm, ε max: 30, 100 mol⁻¹cm⁻¹), and 1,4-bis(4-benzoyl-3-hydroxyphenoxy)-butane (Mw: 483, λ max: 290 nm, ε max: 28,500 mol⁻¹cm⁻¹).

Examples of the cyanoacrylate-based ultraviolet absorbing agent include ethyl 2-cyano-3,3-diphenylacrylate (Mw: 277, λ max: 305 nm, ε max: 15,600 mol⁻¹cm⁻¹) and 2-ethylhexyl 2-cyano-3,3-diphenylacrylate (Mw: 362, λ max: 307 nm, ε max: 14,400 mol⁻¹cm⁻¹).

Examples of the salicylate-based ultraviolet absorbing agent include phenyl salicylate (Mw: 214, λ max: 312 nm, ε max: 5,000 mol⁻¹cm⁻¹) and 4-t-butylphenyl salicylate (Mw: 270, λ max: 312 nm, ε max: 5,400 mol⁻¹cm⁻¹).

Examples of the nickel complex salt-based ultraviolet absorbing agent include (2,2'-thiobis(4-t-octylphenolate))-2 ethylhexylamine nickel (II) (Mw: 629, λ max: 298 nm, ε max: 6,600 mol⁻¹cm⁻¹).

Examples of the benzoate-based ultraviolet absorbing agent include 2',4'-di-t-butylphenyl 3,5-di-t-butyl-4-hydroxybenzoate (Mw: 436, λmax: 267 nm, ε max: 20,200 mol⁻¹cm⁻¹).

Examples of the benzotriazole-based ultraviolet absorbing agent include
2-(2-hydroxy-5-methylphenyl)-2H-benzotriazole (Mw: 225, λ max: 300 nm, ε max: 13,800 mol⁻¹cm⁻¹),
5-chloro-2-(3,5-di-t-butyl-2-hydroxyphenyl)-2H-benzotriazol e (Mw: 358, λ max: 312 nm, ε max: 14,600 mol⁻¹cm⁻¹),
2-(3-t-butyl-2-hydroxy-5-methylphenyl)-5-chloro-2H-benzotri azole (Mw: 316, λ max: 354 nm, ε max: 14,300 mol⁻¹cm⁻¹),
2-(3,5-di-t-pentyl-2-hydroxyphenyl)-2H-benzotriazole (Mw: 352, λ max: 305 nm, ε max: 15,200 mol⁻¹cm⁻¹),
2-(3,5-di-t-butyl-2-hydroxyphenyl)-2H-benzotriazole (Mw: 323, λ max: 303 nm, ε max: 15,600 mol⁻¹cm⁻¹),
2-(2H-benzotriazole-2-yl)-4-methyl-6-(3,4,5,6-tetrahydrophthalimidylmethyl)phenol (Mw: 388, λ max: 304nm, ε max: 14,100 mol⁻¹cm⁻¹) and 2- (2-hydroxy-5-t-octylphenyl) -2H-benzotriazole
(Mw: 323, λ max: 301 nm, ε max: 14,700 mol⁻¹cm⁻¹).

The malonate-based ultraviolet absorbing agent is preferably 2-(1-arylalkylidene) malonates, and is more preferably a compound represented by formula (1) below:

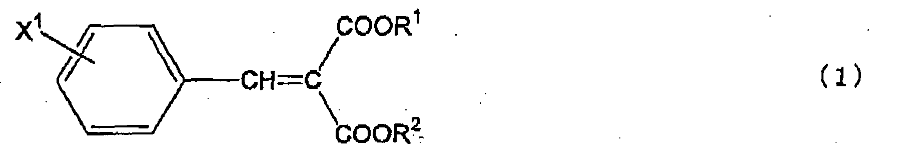

In the formula, X¹ represents a hydrogen atom, an alkyl group with a carbon number of 1 to 6 or an alkoxyl group with a carbon number of 1 to 6, and R¹ and R² each independently represents an alkyl group with a carbon number of 1 to 6.

In formula (1), the alkyl group represented by substituent X¹ or contained in the alkoxyl group as substituent X¹, may be a linear alkyl group or a branched alkyl group. Examples of the alkyl group include a methyl group, an ethyl group, an n-propyl group, an iso-propyl group, an n-butyl group, an iso-butyl group, a sec-butyl group and a tert-butyl group.

The substituent X¹ is preferably a hydrogen atom, an alkyl group with a carbon number of 1 to 4 or an alkoxyl group with a carbon number of 1 to 4, and the substituent X¹ is preferably placed in a para-position with respect to the position of vinyl group.

The alkyl groups as substituents R¹ and R² each independently may be a linear alkyl group or a branched alkyl group. Examples of the alkyl group include a methyl group, an ethyl group, an n-propyl group, an iso-propyl group, an n-butyl group, an iso-butyl group, a sec-butyl group and a tert-butyl group.

The substituents R¹ and R² each independently is preferably an alkyl group with a carbon number of 1 to 4.

Examples of the compound represented by formula (1) include 2-(paramethoxybenzylidene)dimethyl malonate (Mw: 250, λ max: 308 nm, ε max: 24,200 mol⁻¹cm⁻¹).

The oxalanilide-based ultraviolet absorber is preferably alkoxyoxalanilides, and more preferably a compound represented by formula (2) below:

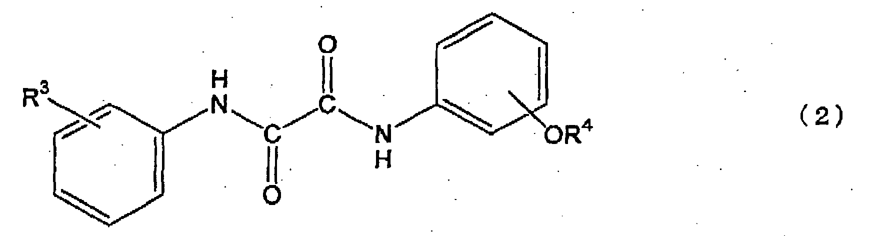

In the formula, R³ and R⁴ each independently represents an alkyl group with a carbon number of 1 to 6.

In formula (2), the alkyl group represented by substituents R³ and R⁴ may be a linear alkyl group or a branched alkyl group. Examples of the alkyl group include a methyl group, an ethyl group, an n-propyl group, an iso-propyl group, an n-butyl group, an iso-butyl group, a sec-butyl group and a tert-butyl group.

Preferably, the alkyl group is an alkyl group with a carbon number of 1 to 4. The substituents R³ and R⁴ are preferably in an ortho-position with respect to the position of the nitrogen atom (N) bonded with the benzene frame.

Examples of the compound represented by formula (2) include 2-ethoxy-2'-ethyloxalanilide (Mw: 312, λ max: 298 nm, ε max: 16,700 mol⁻¹cm⁻¹).

The acetate-based ultraviolet absorber is preferably a compound represented by formula (3) below:

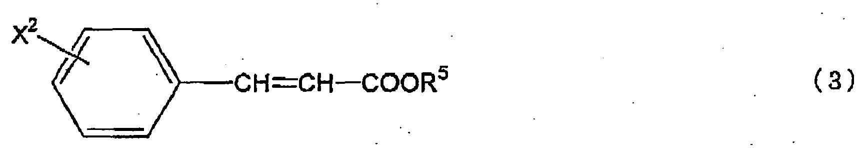

In formula (3), X² represents a hydrogen atom, an alkyl group or an alkoxyl group, and R⁵ represents an alkyl group.

The alkoxyl group as substituent X² may be a linear alkoxyl group or a branched alkoxyl group. Examples of the alkoxyl group include an alkoxyl group with a carbon number of 1 to 6 such as a methoxy group, an ethoxy group, an n-propoxy group, an isopropoxy group, an n-butoxy group, an isobutoxy group, a sec-butoxy group, a tert-butoxy group and an n-pentoxy group. Preferably, the alkoxyl group is an alkoxyl group with a carbon number of 1 to 4, and is more preferably a methoxy group.

The alkyl group as substituent X² may be a linear alkyl group or a branched alkyl group. Examples of the alkyl group include an alkyl group with a carbon number of 1 to 6, such as a methyl group, an ethyl group, an n-propyl group, an isopropyl group, an n-butyl group, an isobutyl group, a sec-butyl group, a tert-butyl group, an n-pentyl group and an n-hexyl group. The alkyl group is preferably an alkyl group with a carbon number of 1 to 4, and is more preferably a methyl group.

Substituent X² is preferably an alkoxyl group, and particularly, an methoxy group is most preferred.

The alkyl group as substituent R⁵ may be an alkyl group with a carbon number of 1 to 10, such as a methyl group, an ethyl group, an n-propyl group, an isopropyl group, an n-butyl group, an isobutyl group, a sec-butyl group, a tert-butyl group, an n-pentyl group, an n-hexyl group, an n-heptyl group, an n-octyl group, an n-nonyl group, an n-decanyl group, a 1-methylpentyl group, a 1-ethylpentyl group, a 1-methylhexyl group and a 2-ethylhexyl group. Among them, a methyl group and a 2-ethylhexyl group is preferred.

The first and/or second layers (i.e., the layer comprising resin (A) and/or the layer comprising resin (B)) may contain a hindered amine in order to further improve durability of the resulting resin plate. The hindered amine is preferably a compound having a 2,2,6,6-tetra-alkylpiperidine structure.

The hindered amine may be contained in either one of the first and second layers or in both of them.

When contained together with ultraviolet absorber in the first and second layers, the amount of the hindered amine may be about 2 parts by weight or smaller, and is preferably about 0.01 part by weight to about 1 part by weight, with respect to the ultraviolet absorber contained together.

Examples of such a hindered amine include a dimethyl succinate/1-(2-hydroxyethyl)-4-hydroxy-2,2,6,6-tetra-methyl piperidine polycondensate, a
poly((6-(1,1,3,3-tetramethylbutyl)imino-1,3,5-triazine-2,4-diyl)((2,2,6,6-tetramethyl-4-piperidyl)imino)hexamethylene( (2,2,6,6-tetramethyl-4-piperidyl)imino)), a
2-(2,3-di-t-butyl-4-hydroxybenzyl)-2-n-butylmaloniobis(1,2, 2,6,6-pentamethyl-4-piperidyl), a
2-(3,5-di-t-butyl-4-hydroxybenzyl)-2-n-butylmalonicbis(1,2, 2,6,6-pentamethyl-4-piperidyl), an
N,N'-bis(3-aminopropyl)ethylenediamine/2,4-bis(N-butyl-N-(1 ,2,2,6,6-pentamethyl-4-piperidyl)amino)-6-chloro-1,3,5-tria zine condensate, a
bis(2,2,6,6-tetramethyl-4-piperidyl)sebacate, and a
succinicbis(2,2,6,6-tetramethyl-4-piperidyl).
The hindered amine may be a compound represented by formula (4) below:

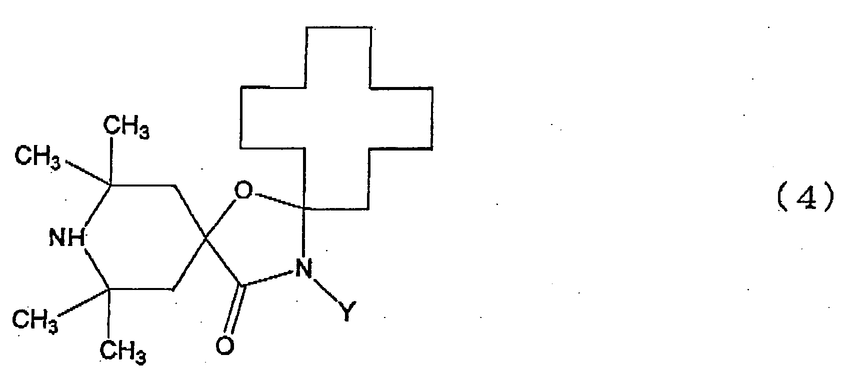

In formula (4), Y represents a hydrogen atom, an alkyl group with a carbon number of 1 to 20, a carboxyalkyl group with a carbon number of 2 to 20, an alkoxyalkyl group with a carbon number of 2 to 25, or an alkoxycarbonylalkyl group with a carbon number of 3 to 25.

The alkyl group (which may be substituent Y, or may be contained in or substituded by the alkoxyl group, or may be contained in or substituded by the alkoxycarbonyl group) may be a linear alkyl group or a branched alkyl group.

Substituent Y is preferably a hydrogen atom or an alkoxycarbonylalkyl group with all carbon numbers of 5 to 24, and is more preferably a hydrogen atom or an alkoxycarbonylethyl group.

Examples of the alkoxycarbonylethyl group include a dodecyloxycarbonylethyl group, a tetradecyloxycarbonylethyl group, a hexadecyloxycarbonylethyl group, and an octadecyloxycarbonylethyl group.

These hindered amines may be used each alone, or in combination of two kinds or more of them.

A resin plate in the present invention may further contain a light-diffusing agent. The resin plate containing a light-diffusing agent can be suitably utilized as a light-diffusing plate. The light-diffusing plate is typically used as a light-diffusing member, together with a light source (such as a cold cathode fluorescent lamp and an LED (light-emitting diode)) in a light-source device, and may be used specifically as a illuminating signboard, a lighting cover and a light-diffusing plate for display. When utilized in such application, the light-diffusing plate is usually placed under a condition such that moisture absorption of the plate is easily changed depending on a temperature change accompanying the switch-on and switch-off of a light source. Therefore, a conventional light-diffusing plate may be adversely affected to have a deformation (such as warp and wave-like shape) when used in a liquid crystal display; and may make odd noise accompanying the deformation when used as a lighting cover. On the other hand, the light-diffusing agent in the present invention can suppress such undesirable phenomenon since the resin plate of the present invention has little deformation due to moisture absorption.

The light-diffusing agent may be contained in either one of the first and second layers (i.e., the layer comprising resin (A) and the layer comprising resin (B)), or in both of them. Preferably, at least the first layer (the layer comprising resin (A)) contains the light-diffusing agent.

When a resin plate in the present invention contains a light-diffusing agent, the amount of the light-diffusing agent may be in the range of 0.1 to 10 parts by weight, is preferably in the range of 0.3 to 7 parts by weight and is more preferably in the range of 1 to 5 parts by weight, per 100 parts by weight of the resin in the first and second layers, respectively. When the amount is too small, light-diffusing property of the resulting resin plate may be insufficient. When the amount is too large, the mechanical strength of the resulting resin plate tends to be lowered.

When the light-diffusing agent has a shape of particle, the weight-average particle diameter is preferably 1 µm or larger in view of shielding property of the resulting resin plate, and 20 µm or smaller in view of strength of the resin plate.

The light-diffusing agent may be a transparent fine particle, which is made from an inorganic or organic material and has a refractive index different from that of resin (A) or (B) contained together with the light-diffusing agent.

The difference in refractive index between the light-diffusing agent and the resin is preferably about 0.02 or larger in view of the diffusing of the incident light, and is preferably about 0.13 or smaller in view of light transmittance.

Examples of the inorganic light-diffusing agent include particles of calcium carbonate, barium sulfate, titanium oxide, aluminum hydroxide, silica (silicon oxide), talc, mica, white carbon, magnesium oxide and zinc oxide.

Examples of the organic light-diffusing agent include a styrene-based polymer particle, an acryl-based polymer particle and asiloxane-based polymer particle.

Preferably, the organic light-diffusing agent is a particle with a weight-average molecular weight of about 500, 000 to about 5,000.000 or a cross-linked polymer having a gel fraction of about 10 % by weight or larger when dissolved in acetone.

Two or more kinds of the light-diffusing agent can be used, if necessary.

The styrene-based polymer particle as a light-diffusing agent may be a particle made of a polymer containing about 50 % by weight or more of a structural unit derived from a styrene-based (i.e., a styrene-skeleton-having) monomer with one (1) radically polymerizable double bond in its molecule. Hereinafter, the monomer with one radically polymerizable double bond in its molecule may be referred to as "a monofunctional monomer", while a monomer with at least two radically polymerizable double bonds in its molecule may be referred to as "a polyfunctional monomer".

Examples of the styrene-based polymer particle include a homopolymer particle of a styrene-based monofunctional monomer; a copolymer particle of a styrene-based monofunctional monomer and another kind of monofunctional monomer; a cross-linking copolymer particle of a styrene-based monofunctional monomer and a polyfunctional monomer; a cross-linking copolymer particle of a styrene-based monofunctional monomer, another kind of monofunctional monomer and a polyfunctional monomer.

The styrene-based polymer particle can be produced by a commonly known method such as a suspension polymerization method, a microsuspension polymerization method, an emulsion polymerization method and a dispersion polymerization method.

Examples of the styrene-based monofunctional monomer providing the polymer for the styrene-based polymer particle, include styrene and substituted styrenes, for example, a halogenated styrene such as chlorostyrene and bromostyrene, and an alkyl styrene such as vinyltoluene and α-methyl styrene.

Two or more kinds of the styrene-based monofunctional monomer can be used, if necessary.

Examples of the monofunctional monomer providing the polymer for the styrene-based polymer particle, other than the styrene-based monofunctional monomer, include methacrylates such as methyl methacrylate, ethyl methacrylate, butyl methacrylate, cyclohexyl methacrylate, phenyl methacrylate, benzyl methacrylate, 2-ethylhexyl methacrylate and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate and 2-hydroxyethyl acrylate and acrylonitrile. Among them, methacrylates such as methyl methacrylate are preferably used. The above-described monofunctional monomer may be used each singly or in a combination of two kinds or more of them.

Examples of the styrene-based polyfunctional monomer providing the polymer for the styrene-based polymer particle, include methacrylates of polyhydric alcohols, for example, 1,4-butanediol dimethacrylate, neopentyl glycol dimethacrylate, ethylene glycol dimethacrylate, diethylene glycol dimethacrylate, tetraethylene glycol dimethacrylate, propylene glycol dimethacrylate, tetrapropylene glycol dimethacrylate, trimethylolpropane trimethacrylate and pentaerythritol tetramethacrylate; acrylates of polyhydric alcohols, for example, 1,4-butanediol diacrylate, neopentyl glycol diacrylate, ethylene glycol diacrylate, diethylene glycol diacrylate, tetraethylene glycol diacrylate, propylene glycol diacrylate, tetrapropylene glycol diacrylate, trimethylolpropane triacrylate and pentaerythritol tetraacrylate; and an aromatic polyfunctional compound such as divinylbenzene and diallyl phthalate. The polyfunctional monomers may be used each singly or in a combination of two kinds or more of them.

The styrene-based polymer particle may have a refractive index of from about 1.53 to about 1.61. The styrene-based polymer particle having a larger amount of a phenyl group and/or s a halogen atom tends to have a larger refractive index.

The acryl-based polymer particle as a light-diffusing agent may be a particle made of a polymer containing about 50 % by weight or more of a structural unit derived from a acryl-based (i.e., a acryl-skeleton-having) monofunctional monomer. Examples of the acryl-based polymer particle include a homopolymer particle of a acryl-based monofunctional monomer; a copolymer particle of a acryl-based monofunctional monomer and another kind of monofunctional monomer; a cross-linking copolymer particle of a acryl-based monofunctional monomer and a polyfunctional monomer; a cross-linking copolymer particle of a acryl-based monofunctional monomer, another kind of monofunctional monomer and a polyfunctional monomer.

The acryl-based polymer particle can be produced by a commonly known method such as a suspension polymerization method, a microsuspension polymerization method, an emulsion polymerization method and a dispersion polymerization method.

Examples of the acryl-based monofunctional monomer providing the polymer for the acryl-based polymer particle, include acrylic acid, methacrylic acid and esters thereof; for example, methacrylates such as methyl methacrylate, ethyl methacrylate, butyl methacrylate, cyclohexyl methacrylate, phenyl methacrylate, benzyl methacrylate, 2-ethylhexyl methacrylate and 2-hydroxyethyl methacrylate; acrylates such as methyl acrylate, ethyl acrylate, butyl acrylate, cyclohexyl acrylate, phenyl acrylate, benzyl acrylate, 2-ethylhexyl acrylate and 2-hydroxyethyl acrylate; methacrylic acid and acrylic acid. The acryl-based monofunctional monomers may be used each singly or in a combination of two kinds or more of them.

Examples of the monofunctional monomer providing the polymer for the acryl-based polymer particle, other than the acryl-based monofunctional monomer, include the same kinds of monofunctional monomer for preparing the styrene-based polymer particle as mentioned above; and acrylonitrile. Such a monofunctional monomers may be used each singly or in a combination of two kinds or more of them. Among them, styrene is preferably used.

Examples of the polyfunctional monomer providing the polymer for the acryl-based polymer particle include the same kinds of polyfunctional monomer for preparing the styrene-based polymer particle as mentioned above. Such a polyfunctional monomers may be used each singly or in a combination of two kinds or more of them.

The acryl-based polymer particle may have a refractive index of from about 1.46 to about 1.55. As with the styrene-based polymer particle, the acryl-based polymer particle having a larger amount of a phenyl group and/or a halogen atom tends to have a larger refractive index.

A siloxane-based polymer particle as a light-diffusing agent may be a particle made from a siloxane-based polymer called silicone rubber or silicone resin, which is in a solid state at normal temperature.

The siloxane-based polymer can be produced by a method of hydrolyzing and condensing chlorosilanes such as dimethyldichlorosilane, diphenyldichlorosilane, phenylmethyldichlorosilane, methyltrichlorosilane and phenyltrichlorosilane. The siloxane-based polymer may be used after being crosslinked with a peroxide such as benzoyl peroxide, 2,4-dichlorbenzoyl peroxide, para-chlorbenzoyl peroxide, dicumyl peroxide, di-tert-butyl peroxide, 2,5-dimethyl-2,5-di(tert-butylperoxy)hexane; or may be used after being condensed and crosslinked with an alkoxysilane if the siloxane-based polymer has a silanol group at the end of the polymer chain.

The siloxane-based polymer preferably has a structure having two or three organic residues per one silicon atom.

The siloxane-based polymer particle may be produced by grinding the above-described siloxane-based polymer. Alternatively, the particle may be obtained as a granular particle by curing a curable polymer having linear organosiloxane block or a composition thereof in a spray state (see, Japanese Patent Publication Laid-Open No. 59-68333). Also, the particle may be obtained as a granular particle by hydrolyzing and condensing alkyltrialkoxysilane or a partial hydrolysis condensate thereof in an aqueous solution of ammonia or amines (see, Japanese Patent Application Laid-Open No. 60-13813).

The siloxane-based polymer may have a refractive index of from about 1.40 to about 1.47. The siloxane-based polymer particle having a larger amount of a phenyl group or an organic group bonded to silicon atom tends to have a larger refractive index.

As mentioned above, the resin plate containing a light-diffusing agent in the present invention can be utilized as a light-diffusing plate with suppressing the adverse effects due to deformation. When the resin plate in the present invention further contains a surfactant, the plate can suppress the adverse effects, more effectively. Any of an anionic surfactant, a cationic surfactant, an amphoteric surfactant and a nonionic surfactant can be used in the present invention. Among them, an anionic surfactant such as sulfonic acid, sulfuric monoester and a salt thereof is preferably used. Specifically, the preferable surfactant is sodium lauryl sulfate, sodium cetyl sulfate and sodium stearyl sulfate.

The surfactant may be contained in either one of the first and second layers or in both of them. Preferably, the surfactant is contained in at least the second layer comprising resin (B). When the surfactant is used, the amount of the surfactant may be in the range of from about 0.1 part by weight to about 5 parts by weight, is preferably in the range of from about 0.2 part by weight to about 3 parts by weight, and is more preferably in the range of from about 0.3 part by weight to about 1 part by weight, with respect to 100 parts by weight of the resin (A) or (B) in which the surfactant is contained.

When a resin plate in the present invention is used as a light-diffusing plate, especially as a lighting cover, it is preferred to provide fine irregularities on at least one surface of the plate, in which the surface is utilized as a so-called matting surface reflecting incident light while scattering the light. Such irregularities preferably have a ten-point average roughness (Rz) of about 1 µm to about 50 µm and an average peak distance (Sm) of about 10 µm to about 300 µm. When Rz is too small, the resulting plate tends to be difficult to have a matting surface. When Rz is too large, the plate tends to weaken against impact (shock) to the surface. When Sm is too large, the resulting plate tends to be difficult to have a matting surface. When Sm is too small, the plate tends to weaken against impact (shock) to the surface.

When a resin plate in the present invention is produced by an extrusion method, the irregularities on the surface can be prepared by a method in which insoluble particles are contained in a resin to be made into the plate having the irregularities; or by a roll transfer method in which the irregularities on a roll are transferred to the surface of the plate. When a resin plate in the present invention is produced by a cast molding, the irregularities on the surface can be prepared by a cell transfer method in which the irregularities in a polymerizing cell are transferred to the resin placed into the cell.

When the irregularities are provided using insoluble particles, the insoluble particles may have a weight-average particle diameter of about 1 µm to about 50 µm. The insoluble particles may be contained in either one of the first and second layers or in both of them. Preferably, the surfactant is contained in at least the second layer comprising resin (B). When the insoluble particles is used, the amount of the insoluble particles may be in the range of from about 3 parts by weight to about 20 parts by weight, with respect to 100 parts by weight of the resin (A) or (B) in which the insoluble particles are contained.

The thickness of a resin plate of the present invention can be decided depending on its applications and the like, and may in the range of from about 0. 8 mm to about 5 mm. With regard to the ratio of the thickness (t_{A}) of the first layer comprising resin (A) to the thickness (t_{B}) of the second layer comprising resin (B), the ratio t_{A}/t_{B} may be in a range of from about 99/1 to about 1.1/1, and is preferably in a range of from about 50/1 to about 10/1.

In view of durability, the resin plate of the present invention has two second layers in which the second layers (B) are laminated on both sides of the first layer. In view of durability and cost, the total thickness of the second layer (s) is preferably about 0.5 or less of the thickness of the first layer.

A resin plate of the present invention may contain, in addition to the above-mentioned ultraviolet absorber and the like, other kinds of additives, if necessary. Examples of the additive include a impact-resisting agent such as an acryl-based multilayered polymer particle and a graft rubber polymer particle; an antistatic agent such as a polyether ester amide; an antioxidant such as hindered phenol; a flame retardant such as a phosphoric ester; a lubricant such as palmitic acid and stearyl alcohol; and a coloring agent such as dyestuff and pigment. The additive may be used each singly or in a combination of two kinds or more of them, and may be contained in either of the first and second layers or in both of them.

A resin plate in the present invention can be manufactured by a method such as a coextrusion molding method, a laminating method, a thermal adhesion method, a solvent adhesion method, a polymerization adhesion method, a cast polymerization method and a surface application method.

When a resin plate in the present invention is produced by a coextrusion molding method, the resin plate can be produced in a way such that resin (A) and resin (B) (each containing an optional additive, if necessary) are extruded from a die (such as a feed block die and a multi-manifold die) for coextrusion molding to be integrally laminated while being heated and melt-kneaded by respective discrete extruders (such as single or twin screw extruders), and then the integrally laminated plate is cooled down and cured using a roll unit.

When a resin plate in the present invention is produced by a laminating method, the resin plate can be produced in a way such that one of resins (A) and (B) (each containing an optional additive, if necessary) is molded into a plate shape and then the other one of resins (A) and (B) is laminated thereto in a heating and melting state.

When a resin plate in the present invention is produced by a thermal adhesion method, the resin plate can be produced in a way such that resin (A) and resin (B) (each containing an optional additive, if necessary) are respectively molded into plates, which are then pressed to each other at a temperature higher than the softening points of both resins, whereby the plates are integrally laminated.

When a resin plate in the present invention is produced by a solvent adhesion method, the resin plate can be produced in a way such that rosins (A) and (B) (each containing an optional additive, if necessary) are respectively molded into plates, which are then laminated to each other using a solvent capable of dissolving either one or both of the plates.

When a resin plate in the present invention is produced by a polymerization adhesion method, the resin plate can be produced in a way such that resins (A) and (B) (each containing an optional additive, if necessary) are respectively molded into plates, which are then laminated to each other using a polymerizable adhesive. The polymerizable adhesive may be polymerized by heat or by light. The polymerizable adhesive can be prepared by adding a thermal polymerization initiator or photo polymerization initiator into a monomer or prepolymer for producing resin (A) or (B).

When a resin plate in the present invention is produced by a cast polymerization method, the resin plate can be produced in a way such that one of resins (A) and (B) (each containing an optional additive, if necessary) is molded into a plate shape, which is then placed inside a cell for the cast molding, and then the other one of resins (A) and (B) is introduced into the cell and is polymerized therein.

When a resin plate in the present invention is produced by a surface application method, the resin plate can be produced in a way such that one of resins (A) and (B) (each containing an optional additive, if necessary) is molded into a plate shape and then the other one of resins (A) and (B) is applied thereto and is polymerized.

Thus obtained resin plate in the present invention may be utilized in indoor or outdoor applications, and is suitably used for preparing a light-diffusing plate. The light-diffusing plate can be used, for example, as a signboard (including an illuminating signboard), a lighting cover, a display case and a light-diffusing plate for display. Especially, as mentioned above, the light-diffusing plate is typically used as a light-diffusing member, together with a light source (such as a cold cathode fluorescent lamp and an LED (light-emitting diode)) in a light-source device, and may be used specifically as a illuminating signboard, a lighting cover and a light-diffusing plate for display. The light-diffusing plate for display may be a light-diffusing plate utilized in a direct-type or edge-light-type backlight for a liquid crystal display.

The invention being thus described, it will be apparent that the same may be varied in many ways. Such variations are to be regarded as within the spirit and scope of the invention, and all such modifications as would be apparent to one skilled in the art are intended to be within the scope of the following claims.

The entire disclosure of the Japanese Patent Applications Nos. 2004-256678 filed on September 3, 2004 and 2004-274833 filed on September 22, indicating specifications, claims and summaries, are incorporated herein by reference in their entirety.

### EXAMPLES

The present invention is described in more detail by reference to the following Examples, which should not be construed as a limitation upon the scope of the present invention.

In Examples and Comparative Examples, the following extruders, a feed block, a die and rolls were utilized:
Extruder (1) : an extruder with a screw diameter of 40 mm, a single axial type, which is equipped with a vent and manufactured by TANABE PLASTICS CO., LTD.
Extruder (2) : an extruder with a screw diameter of 20 mm, a single axial type, which is equipped with a vent and manufactured by TANABE PLASTICS CO., LTD.
Feed blocks : two-kind three-layer distribution-type feed blocks manufactured by TANABE PLASTICS CO., LTD.
Die : a T-die with lip width of 250 mm and a lip slit of 6 mm.
Rolls : Three vertical polishing rolls.

A resin plate obtained in each of Examples and Comparative Examples was evaluated in the following manners.

### (1) Total Light Transmittance (Tₜ):

Total light transmittance (Tₜ) was measured by using a haze transmittance meter ['HR-100' manufactured by MURAKAMI COLOR RESEARCH LABORATORY] in accordance with JIS K 7361.

### (2) Hiding Property (I₅/I₀) and Light Diffusibility (I₇₀/I₀):

Hiding property (I₅/I₀) and light diffusibility (I₇₀/I₀) were measured by using a automatic goniophotometer ['GP-1R' manufactured by MURAKAMI COLOR RESEARCH LABORATORY] under the conditions that the intensity of the transmitted light at a transmission angle of 0° by vertical incident light was to be as I₀, and the intensities of the transmitted light at a transmission angle of 5° and 70° by vertical incident light was to be as I₅ and I₇₀, respectively.

### (3) Water Absorption Rate :

A resin plate to be evaluated was cut out so as to obtain a test piece thereof with a size of 5 cm X 5 cm, which was then dried in an oven with a temperature of 80 °C for 24 hours, to measure the weight (W₀) of the dried test piece. The dried test piece was immersed in pure water a temperature of 50 °C for 10 days, to measure the weight (W) of the immersed test piece. Using the weights W₀ and W, a water absorption rate [(W-W₀) / W₀] of the resin plate was obtained.

### (4) Evaluation of Warpage due to Water Absorption :

A resin plate to be evaluated was cut out so as to obtain a test piece thereof with a size of 18 cm X 18 cm, which was interposed between two sheets (with a little larger size of the test piece) of steel flat plates and was held in the air at a temperature of 90°C for 5 hours while being maintained in a plane shape, and thereafter was stood to be cooled to be dried for 24 hours. Next, this test piece was held at a room temperature (of about 25°C) while only one surface thereof was being immersed in pure water. After 24 hours at a room temperature, each of the quantity (mm) of warping up in four corners of the test piece was respectively measured, and the average value thereof was used as a degree of warpage of the resin plate due to water absorption.

### (5) Durability :

A resin plate to be evaluated was cut out so as to obtain test pieces thereof having a size of 6 cm x 7 cm. One of the test pieces was then continuously irradiated with ultraviolet rays at a temperature of 60°C for 100 hours by using an ultraviolet irradiating device ['ATLAS-UVCON' manufactured by TOYO SEIKI CO., LTD.].

With respect to the test pieces prepared before and obtained after the irradiation, L*, a* and b* of the transmitted light were obtained with a spectral transmittance meter ['U4000' manufactured by Hitachi, Ltd.] equipped with an integrating sphere. Using the results of the measurements, ΔE (with transmitted light) of the resin plate before and after the irradiation was calculated.

Resins used in Examples and Comparative Example are as follows.

Resin (1) : a copolymer resin of 60 parts by weight of methyl methacrylate and 40 parts by weight of styrene, having a refractive index of 1.55.

Resin (2) : a copolymer resin of 20 parts by weight of methyl methacrylate and 80 parts by weight of styrene, having a refractive index of 1.57.

Resin (3) : a styrene resin having a refractive index of 1.59.

Light-diffusing agents used in Examples and Comparative Examples are as follows.

Light-diffusing agent (1) is a light-diffusing agent made of copolymer particles of 95 parts by weight of methyl methacrylate and 5 parts by weight of ethyleneglycol dimethacrylate, and has a refractive index of 1.49 and a weight-average particle diameter of 5 µm.

Light diffusing agent (2) is a light-diffusing agent made of crosslinked siloxane-based polymer particles ['TORAYFIL DY33-719' manufactured by DOW CORNING TORAY SILICONE CO., LTD.], and has a refractive index of 1.42 and a weight-average particle diameter of 2 µm.

Light-diffusing agent (3) is a light-diffusing agent made of copolymer particles of 95 parts by weight of methyl methacrylate and 5 parts by weight of ethyleneglycol dimethacrylate, and has a refractive index of 1.49 and a weight-average particle diameter of 4 µm.

It is noted that the weight-average particle diameters of the above-mentioned light-diffusing agents corresponds to D50 values, measured by using a microtrac particle size analyzer (light diffraction scattering particle diameter measuring machine) ['Model 9220 FRA' manufactured by NIKKISO CO., LTD.].

### Comparative Example 1

Resin (2) (100 parts by weight) as resin (A), light-diffusing agent (1) (3 parts by weight), light-diffusing agent (2) (0.7 part by weight) and a 2-(paramethoxybenzylidene)dimethyl malonate (0.1 part by weight) as an ultraviolet absorber (UVA) ['Sanduvor PR-25' manufactured by CLARIANT K.K., which is a compound represented in the above-described formula (1) in which X¹ is a methoxy group and a substitution position thereof is a para-position, and R¹ and R² are methyl groups] were mixed by a Henschel mixer and were melt-kneaded by extruder (1), whereby obtaining a first melt-kneaded product. The first melt-kneaded product was supplied into a feed block.

Meanwhile, Resin (1) (100 parts by weight) as resin (B), a 2-(paramethoxybenzylidene)dimethyl malonate (0.5 part by weight) as an ultraviolet absorber (UVA) ['Sanduvor PR-25' manufactured by CLARIANT K.K.] and a mixture (0.3 part by weight; as a surfactant) of sodium cetyl sulfate with sodium stearyl sulfate and light-diffusing agent (3) (8 parts by weight) were mixed by a Henschel mixer and were melt-kneaded by Extruder (2), whereby obtaining a second melt-kneaded product. The second melt-kneaded product was supplied into another feed block.

In such a manner that the first melt-kneaded product obtained above is made into a first layer and the second melt-kneaded product obtained above is made into second layers placed onto the surfaces of the first layer, the first melt-kneaded product and the second melt-kneaded product were supplied from the feed blocks, respectively, so as to be coextrusion-molded at an extrusion resin temperature of 250°C, whereby obtaining a resin plate having a width of 23 cm and a thickness of 2 mm. The resin plate had a three-layer constitution such that the second layers were laminated on both surfaces of the first layer, each of the second layers having a thickness of 0.05 mm and the first layer having a thickness of 1.9 mm. The resin plate contained 2.5 g of the ultraviolet absorber (UVA) per unit area (1 m²) of the plate.

The results of evaluating the resin plate are shown in Table 2.

### Examples 1-3 and Comparative Examples 2-3

Resin plates were obtained in the same manner as in Comparative Example 1 except that the kind of resins and the amounts of UVA were changes as shown in Table 1(A) and in Table 1(B) below, and were evaluated. The amount of UVA contained in the plate (g/m²) are shown in Table 1(C) below. The results of evaluating the resin plate are shown in Table 2.

**Table 1(A): First layer**

| | Resin as resin (A) | Amount of Light-diffusing agent (parts by weight) | |
|---|---|---|---|
| | | Agent (1) | Agent (2) |
| Comparative Example 1 | Resin (2) | 3 | 0.7 |
| Comparative Example 2 | Resin (2) | 3 | 0.7 |
| Example 1 | Resin (3) | 2 | 0.3 |
| Example 2 | Resin (3) | 0 | 0 |
| Example 3 | Resin (3) | 3 | 0.5 |
| Comparative Example 3 | Resin (2) | 3 | 0.7 |

**Table 1(B): Second layer**

| | Resin as resin (B) | Amount of light-diffusing agent (parts by weight) |
|---|---|---|
| | | Agent (3) |
| Comparative Example 1 | Resin (1) | 8 |
| Comparative Example 2 | Resin (1) | 8 |
| Example 1 | Resin (2) | 8 |
| Example 2 | Resin (2) | 8 |
| Example 3 | Resin (3) | 8 |
| Comparative Example 3 | Resin (1) | 8 |

**Table 1(C): Amount of UVA contained in the plate**

| | Amount of UVA contained in the plate (parts) | | Amount of UVA contained in the plate (g/m²) | |
|---|---|---|---|---|
| | First layer | Second layer | First layer | Second layer |
| Comparative Example 1 | 0.1 | 0.5 | 2 | 0.5 |
| Comparative Example 2 | 0.5 | 1 | 10 | 1.1 |
| Example 1 | 0.5 | 1 | 10 | 1.1 |
| Example 2 | 0.2 | 1 | 4 | 1.1 |
| Example 3 | 0.5 | 0.5 | 10 | 0.5 |
| Comparative Example 3 | 0 | 0 | 0 | 0 |

**Table 2**

| | Tt (%) | I₅/I₀ (%) | I₇₀/I₀ (%) | Water Absorpt -ion Rate(%) | Degree of Warpage (mm) | ΔE |
|---|---|---|---|---|---|---|
| Comparative Example 1 | 62.5 | 98.9 | 19.1 | 0.4 | 0.91 | 3.7 |
| Comparative Example 2 | 63.2 | 98.6 | 18.2 | 0.4 | 0.93 | 1.6 |
| Example 1 | 62.7 | 98.3 | 14.4 | 0.1 | 0.12 | 0.8 |
| Example 2 | 90.4 | 0 | 0 | 0.1 | 0.14 | 2.7 |
| Example 3 | 53.5 | 99.0 | 29.4 | 0.1 | 0.12 | 4.9 |
| Comparative Example 3 | 63.2 | 98.5 | 18.7 | 0.4 | 0.93 | 7.2 |

## Claims

1. A resin plate comprising a first layer and at least one second layer placed on at least one side of the first layer,
wherein the first layer comprises a resin having 75 % by weight or more of styrene-based units on the basis of the resin in the first layer, and
the second layer comprises an ultraviolet absorber and a resin having 50 % by weight or more of styrene-based units on the basis of the resin in the second layer in which the ultraviolet absorber is contained in the second layer in the amount of 0.1 to 3 parts by weight per 100 parts by weight of the resin in the second layer and is spread at 0.2 to 2 g per square meter.of the second layer.

2. The resin plate according to claim 1, wherein the resin in the first layer further has methacrylate units in the amount of 25 % by weight or less on the basis of the resin in the first layer.

3. The resin plate according to claim 1, wherein the resin for the second layer further has methyl methacrylate units in the amount of 50 % by weight or less on the basis of the resin in the second layer.

4. The resin plate according to claim 1, wherein the ultraviolet absorber is an ultraviolet absorber having a relative maximum absorption peak at a wavelength in the range of from about 250 nm to about 320 nm.

5. The resin plate according to claim 4, wherein the ultraviolet absorber is an ultraviolet absorber having the relative maximum absorption peak in the wavelength range of from about 250 nm to about 320 nm as the most largest absorption peak in the wavelength range of from about 250 nm to about 800 nm.

6. The resin plate according to claim 1, wherein the first layer further comprises a light-diffusing agent in the amount of from 0.1 to 10 parts by weight per 100 parts by weight of the resin in the first layer.

7. The resin plate according to claim 1, wherein the at least one second layer further comprises a surfactant in the amount of from 0.1 to 5 parts by weight per 100 parts by weight of the resin in the at least one second layer.

8. The resin plate according to claim 1, wherein the resin plate has fine irregularities on at least one surface of the plate.
